# EUROPEAN PATENT APPLICATION

(11) **EP 0 567 964 A2**
(43) Date of publication of application: **03.11.1993**
(21) Application number: 93106721.9
(22) Date of filing: 26.04.1993
(51) Int. Cl.: B01D 53/36

(54) **Process for flue gas denitration**

(30) Priority: 28.04.1992 JP 109891/92; 20.01.1993 JP 7703/93
(71) Applicant: MITSUBISHI JUKOGYO KABUSHIKI KAISHA, Tokyo (JP)
(72) Inventor: Morii, Atsushi, c/o Nagasaki Ship. & Mach. Works, Nagasaki-shi, Nagasaki-ken (JP); Kaneko, Shozo, c/o Nagasaki Ship. & Mach. Works, Nagasaki-shi, Nagasaki-ken (JP); Imamoto, Toshihiko, c/o Nagasaki Ship.& Mach.Works, Nagasaki-shi, Nagasaki-ken (JP); Serizawa, Satoru, c/o Nagasaki Ship.& Mach. Works, Nagasaki-shi, Nagasaki-ken (JP); Naito, Osamu, c/o Nagasaki Ship.& Mach.Works, Nagasaki-shi, Nagasaki-ken (JP); Onishi, Toshiyuki, c/o Nagasaki Ship.& Mach.Works, Nagasaki-shi, Nagasaki-ken (JP); Kobayashi, Norihisa, c/o MITSUBISHI JUKOGYO K.K., Chiyoda-ku, Tokyo (JP); Iida, Kouzo, c/o MITSUBISHI JUKOGYO K.K., Nishi-ku, Hiroshima-shi, Hiroshima-ken (JP)
(74) Representative: Behrens, Dieter, Dr.-Ing.

(57) **Abstract**

A process for denitrating flue gas which comprises disposing a denitration catalyst bed using NH₃ as a reducing agent in a region where the flue gas temperature ranges from 200 to 600°C; injecting NH₃ in an amount more than equimolar with nitrogen oxides in the flue gas at a point of the system upstream of the denitration catalyst bed and thereby removing NOx; and removing excess NH₃ by adsorption at an NH₃ adsorber which contains an NH₃ adsorbent consisting of a metal oxide and having a specific surface area of at least 30 m²/g in a region downstream of the denitration catalyst bed where the flue gas temperature is 200°C or below.

## Description

### FIELD OF THE INVENTION AND RELATED ART STATEMENT

The present invention relates to a process for flue gas denitration.

Nitrogen oxides in flue gases have hitherto been removed by dry denitration systems using NH₃ as a reducing agent. The rates of denitration attained today are no more than about 80 to 90 percent. Attempts to achieve higher efficiencies above 90 percent have been practically foiled by attendant increases in NH₃ released into the atmosphere.

For controlling NOx emission, dry denitration systems have been commonly used. The concentration of NH₃ as a reducing agent at the exit of the denitration equipment usually has to be kept low in order to avoid both the waste of NH₃ and its release in large quantity to the atmosphere. As a result, the denitration rate is limited to 80 to 90 percent at most.

### OBJECT AND SUMMARY OF THE INVENTION

The present invention, in view of the state of the art described above, is intended to provide a process whereby a dry denitration apparatus can achieve an efficiency as high as more than 90 percent.

The invention provides a process for denitrating flue gas characterized by the steps of installing a dry denitrator using NH₃ as a reducing agent in a region of the system where the flue gas temperature ranges from 200 to 600°C; injecting NH₃ in an amount more than equimolar with nitrogen oxides in the flue gas at a point of the system upstream of the dry denitrator and thereby removing NOx; and locating an NH₃ adsorber which contains an NH₃ adsorbent consisting of a metal oxide and having a specific surface area of at least 30 m²/g in a region downstream of the dry denitrator where the flue gas temperature is 200°C or below, whereby excess NH₃ is removed by adsorption from the flue gas.

The invention provides also a process as defined above which is further characterized in that the NH₃ adsorbent consisting of a metal oxide and having a specific surface area of at least 30 m²/g comprises a metal oxide selected from the group consisting of zeolites, alumina, titania, silica, and zirconia.

By operating a denitration system so that the denitration reaction proceeds with an NH₃/NOₓ (molar ratio) of more than 1, a larger amount of NH₃, which is a reducing agent, can be maintained with respect to that of NOₓ. This ensures the contact of NOx with NH₃ and facilitates the NOx removal. As a result, the constant excess of NH₃ over NOx leaves a substantial amount of unused NH₃ at the exit of the denitrator. This buildup of the NH₃ at the exit is undesirable because it leads to not only wasteful consumption of NH₃ but also causes offensive smell and other problems when it is released to the atmosphere. For these reasons the NH₃ must be removed by adsorption. Under the invention the NH₃ at the exit of a denitrator is adsorbed away using an NH₃ adsorbent consisting of a metal oxide and having a specific surface area of at least 30 m²/g. The NH₃ adsorption performance of the NH₃ adsorbent depends quite largely upon temperature, and favorable NH₃ adsorption performance is realized at temperatures below 200°C. A bed of the NH₃ adsorbent is laid, therefore, in a location where it meets the flue gas at a temperature below 200°C.

The NH₃ adsorbent to be used in the present invention, which contains a metal oxide and having a specific surface area of at least 30 m²/g, comprises, for example, any of zeolites, alumina, titania, silica, or zirconia.

NH₃ that has been adsorbed by the NH₃ adsorbent can easily be desorbed by heating the adsorbent above 200°C. The desorbed NH₃ is not a waste; it is reusable as a reducing agent. When the amount of the desorbed NH₃ is too small for reuse, it is mixed with combustion air and burned off. There is no need for extra equipment for the disposal of NH₃.

### BRIEF DESCRIPTION OF THE DRAWINGS

Fig. 1 is a flow diagram of an embodiment of the present invention;
Fig. 2 is a flow diagram of another embodiment of the invention;
Fig. 3 is a graph showing changes in the NOx concentration in flue gas at the exit of a denitration reactor after the initiation of NH₃ injection in conformity with the invention;
Fig. 4 is a graph showing the relationship between the gas temperature for the NH₃ adsorbent and the NH₃ adsorption quantity ratio in Example 2 of the invention;
Fig. 5 is a graph showing the results of adsorption-desorption tests on the NH₃ adsorbent in Example 3 of the invention; and
Fig. 6 is a graph showing the relationship between the gas temperature for the NH₃ adsorbent and the NH₃ adsorption quantity ratio in Example 4 of the invention.

### DETAILED DESCRIPTION OF PREFERRED EMBODIMENTS

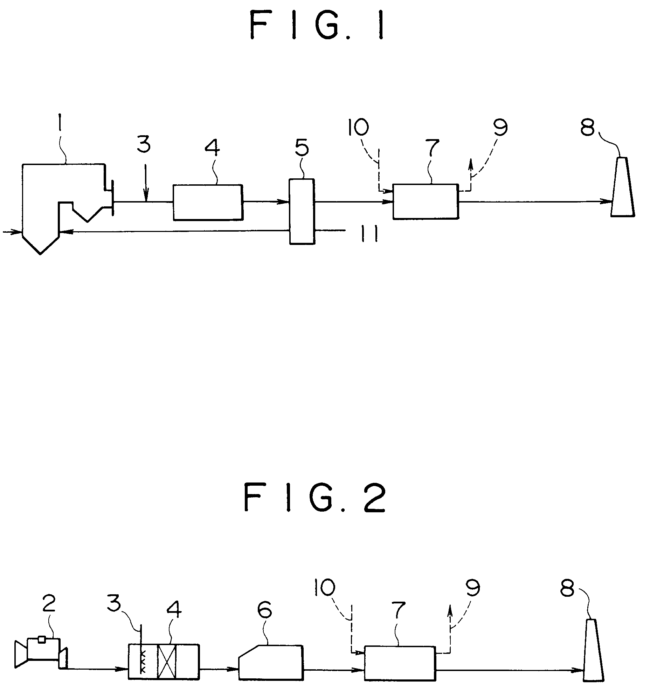

Typical embodiments of the invention will now be described in detail with reference to Figs. 1 and 2, with further clarification of their operation.

In Fig. 1 is shown the flow diagram of a system for the denitration of flue gas and recovery of NH₃, including a boiler as a flue gas source. Fuel, air, and the like are introduced into the boiler 1 and burned, generating NOx-laden flue gas. An NH₃ injection nozzle 3 and a dry denitrator 4 which holds a denitration catalyst are connected to a flue gas duct at points downstream of the boiler 1. An air preheater 5 as a waste heat cooling or recovery means is located further downstream. The preheater effects heat exchange of the flue gas with combustion air 11 to lower the flue gas temperature below 200°C. Behind the preheater 5 is disposed an NH₃ adsorber 7 which contains an NH₃ adsorbent. The flue gas thus denitrated and stripped of NH₃ is released through a stack 8 to the atmosphere.

The NH₃ adsorber 7 is packed with an NH₃ adsorbent consisting of a metal oxide and having a specific surface area of at least 30 m²/g. A separate line is formed to permit a hot gas to be introduced into the NH₃ adsorber 7 through a hot gas inlet duct 10 to adjust the flue gas temperature to 200°C or above, preferably 250°C or above. Independently of the line extending to the stack 8, an alternative line is provided so that, when the hot gas is introduced, the gas forced out of the adsorber can be conducted by a damper and other parts not shown to a desorbed gas discharge duct 9.

Another system for flue gas denitration and NH₃ recovery including a gas turbine as a flue gas generator will now be explained in connection with Fig. 2. As fuel, air, etc. are fed and burned together, the gas turbine 2 generates high-temperature NOx-laden flue gas. On the downstream side of the gas turbine 2 installed are a dry denitrator 4 packed with a catalyst and which incorporates an array of ammonia spray nozzles 3, and a flue gas boiler 6. In the boiler heat exchange is effected with water to lower the flue gas temperature to 200°C or below. Other functions of the system are the same as those of the system illustrated in Fig. 1 and their description is omitted.

The present invention thus renders it possible to remove 99% or more NOx from flue gas. In addition, it avoids wasteful consumption of NH₃ used as a reducing agent.

### (Example 1)

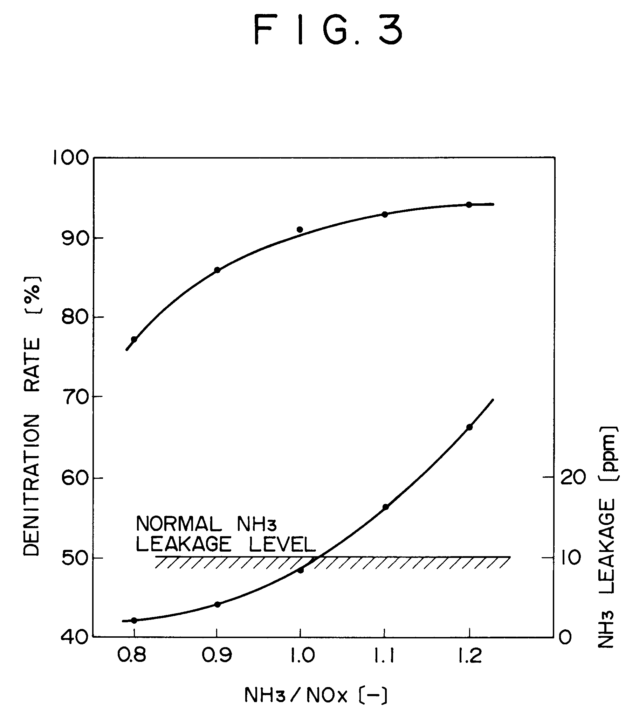

In a gas flow rate of 200 Nm³/h and at a gas temperature of 380°C, a flue gas composed of 100 ppm NOx, 14-15% O₂, and the remainder N₂, CO₂, and H₂O was passed through an adsorber packed with a honeycomb catalyst made up of TiO₂ (about 75%), V₂O₅ (1%), WO₃ (about 8%), and the remainder a bulking auxiliary agent so as to attain a space velocity (SV) of about 10000 H⁻¹. The NH₃/NOₓ (molar ratio) was varied from 0.8 to 0.9, 1.0, 1.1, and 1.2 and the denitration performances achieved were confirmed, the results being graphically represented in Fig. 3. The graph indicates the tendency that the normal value (10 ppm) is easily surpassed as the denitration rate rises beyond 90%.

### (Example 2)

An NH₃ adsorbent was prepared in the form of 3 mm-dia. pellets consisting of 80% titanium oxide and the balance a bulking auxiliary agent. Samples then made had varying specific surface areas as given in Table 1.

**Table 1**

| Sample | Specific surface area, m²/g |
|---|---|
| A | 2-3 |
| B | 15 |
| C | 30 |
| D | 50 |
| E | 80 |
| F | 120 |

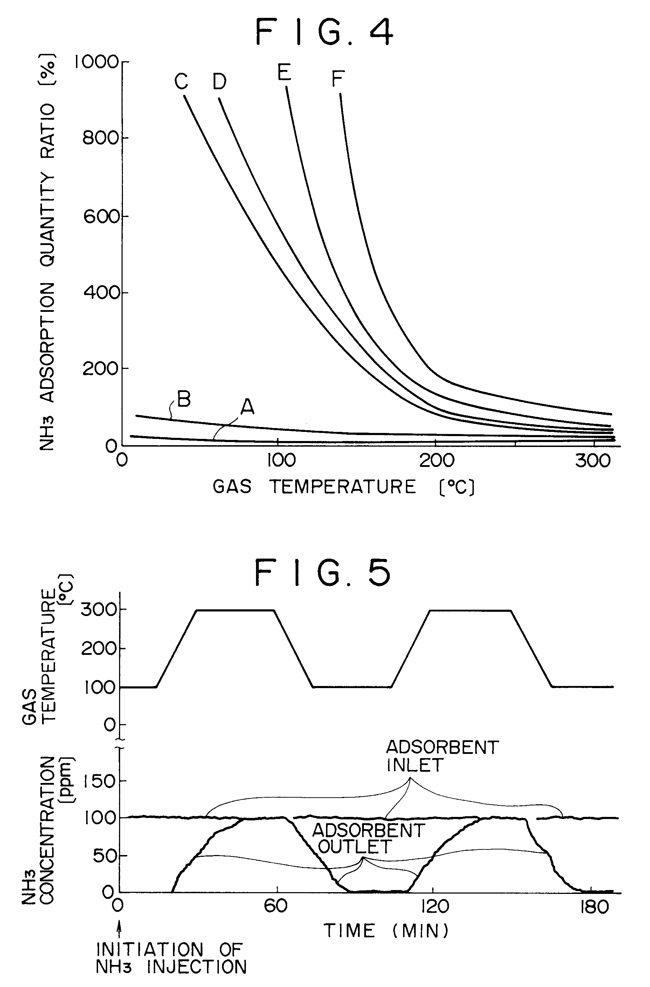

The temperature dependence of the performance of the sample NH₃ adsorbents was ascertained under the following conditions, the results being shown in Fig. 4.
- Gas quantity :: 400 Nℓ/h
- Temperature :: 100, 150, 200, 250, 300, and 450°C
Flue gas composition:
- NOx :: 1 ppm
- NH₃ :: 20 ppm
- O₂ :: 14%
- balance :: H₂O + N₂ + CO₂
- NH₃ adsorbent:: 3 mm-dia. TiO₂-base pellets, 20 cc
As can be seen from Fig. 4, the NH₃ adsorption increases sharply at temperatures below 200°C and with NH₃ adsorbents having a specific surface area of 30 m²/g or more. In Fig. 4, the curves A to F represent the NH₃ adsorbent samples shown in Table 1.

### (Example 3)

A temperature swing test was conducted with 20 cc of an adsorbent having the same composition as above (80% TiO₂ and the balance a bulking auxiliary agent, but with a specific surface area of 70 m²/g) under the conditions given below. The test revealed that favorable adsorption-desorption properties are obtained as shown in Fig. 5.
- Gas quantity :: 400 Nℓ/h
- Temperature :: swung between 100°C and 300°C
Flue gas composition:
- NOx :: 1 ppm
- NH₃ :: 100 ppm
- O₂ :: 14%
- balance:: H₂O + N₂ + O₂
- NH₃ adsorbent:: 3 mm-dia. TiO₂-base pellets, 20 cc

### (Example 4)

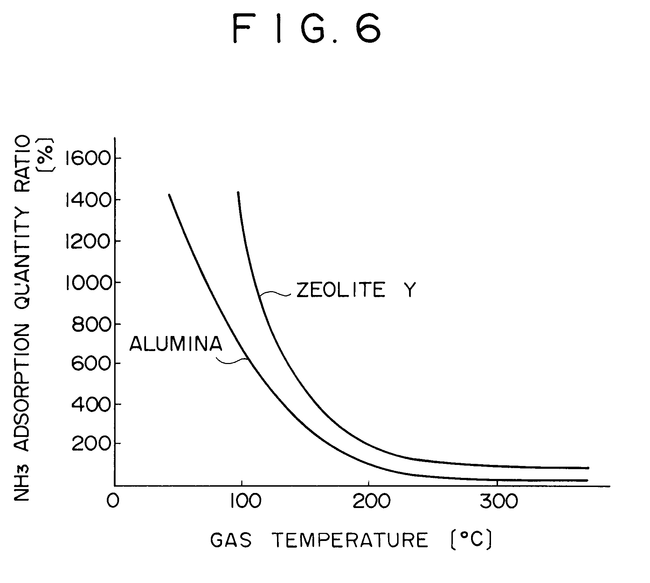

An NH₃ adsorbent consisting of 80% zeolite Y and 20% bulking auxiliary agent and another NH₃ adsorbent consisting of 80% alumina and 20% bulking auxiliary agent were both pelletized to 3 mm-dia. pellets. Their adsorption characteristics were confirmed under conditions identical with those used in Example 3. The two NH₃ adsorbents had specific surface areas of 500 and 200 m²/g, respectively. The results are shown in Fig. 6. As is clear from Fig. 6, the adsorption increased in both cases at temperatures below 200°C.

Silica and zirconia, when employed as NH₃ adsorbents, gave generally similar results.

## Claims

1. A process for denitrating flue gas characterized by the steps of installing a dry denitrator using NH₃ as a reducing agent in a region where the flue gas temperature ranges from 200 to 600°C; injecting NH₃ in an amount more than equimolar with nitrogen oxides present in the flue gas at a point upstream from the dry denitrator so as to remove NOx; and removing excess NH₃ by adsorption at an NH₃ adsorber which contains an NH₃ adsorbent consisting of a metal oxide and having a specific surface area of at least 30 m²/g in a region which is downstream from the dry denitrator and where the flue gas temperature is 200°C or below, whereby excess NH₃.

2. The process as claimed in claim 1, wherein the NH₃ adsorbent consisting of a metal oxide and having a specific surface area of at least 30 m²/g comprises a metal oxide selected from the group consisting of zeolites, alumina, titania, silica, and zirconia.
